# EUROPÄISCHE PATENTSCHRIFT

(11) **EP 1 205 481 B1**
(45) Veröffentlichungstag und Bekanntmachung des Hinweises auf die Patenterteilung: **31.05.2006**
(21) Anmeldenummer: 01122839.2
(22) Anmeldetag: 22.09.2001
(51) Int. Cl.: C07F 7/08, C04B 41/00, C09D 183/04

(54) **N-Propylethoxysiloxane, Verfahren zu deren Herstellung und deren Verwendung**
N-Propylethoxysiloxane, preparation and use thereof
N-Propyléthoxysiloxane, sa préparation et son utilisation

(30) Priorität: 14.11.2000 DE 10056344
(43) Veröffentlichungstag der Anmeldung: 15.05.2002
(73) Patentinhaber: Degussa AG, 40474 Düsseldorf (DE)
(72) Erfinder: Standke, Burkhard, Dr., 79540 Lörrach (DE); Mack, Helmut, Dr., 79618 Rheinfelden (DE)

(56) Entgegenhaltungen:
- EP-A- 0 579 453
- EP-A- 0 761 675
- US-A- 3 772 065
- US-A- 4 716 051
- US-A- 5 112 393
- US-A- 5 282 998
- US-A- 5 932 757
- PATENT ABSTRACTS OF JAPAN vol. 015, no. 177 (C-0829), 7. Mai 1991 (1991-05-07) & JP 03 040976 A (SUMITOMO SEIKA CHEM CO LTD), 21. Februar 1991 (1991-02-21)

## Beschreibung

Die vorliegende Erfindung betrifft spezielle Gemische von n-Propylethoxysiloxanen, ein Verfahren zu deren Herstellung und deren Verwendung.

Alkyl-funktionelle Silane und Siloxane finden beispielsweise Anwendung bei der Hydrophobierung saugfähiger mineralischer Stoffe.

EP 0 814 110 A1 beschreibt die Herstellung kettenförmiger und/oder cyclischer C₃₋C₁₈-Alkylalkoxysiloxane über ein zweistufiges Verfahren, ausgehend von dem entsprechenden Alkylchlorsilan, das zunächst zum Alkylalkoxysilan verestert und anschließend als Edukt für die gezielte Hydrolyse und Kondensation zum Alkylalkoxysiloxan eingesetzt wird. Hierbei wird für die gezielte Hydrolyse bzw. Kondensation mehr als 1 Mol Wasser pro Mol Si eingesetzt. So erhaltene Alkylalkoxysiloxane liegen in der Regel als Oligomerengemisch vor. Die Alkylalkoxysiloxane können neben Alkyl- sowie Alkoxygruppen auch Hydroxygruppen tragen, wenn durch Hydrolyse Alkohol abgespalten wird. Ansonsten besitzen Siloxane gemäß EP 0 814 110 A1 einen Oligomerisierungsgrad n von 2 bis 20, d. h. sie weisen 2 bis 20 Si-Einheiten pro Molekül auf, besitzen eine Viskosität von bis zu 100 mPa s und finden u. a. Verwendung für die Hydrophobierung mineralischer Oberflächen.

Mittel zur Hydrophobierung mineralischer Oberflächen, die eine hohe Viskosität besitzen, führen im Allgemeinen zu einem schlechten Eindringverhalten des Wirkstoffs in das Substrat. Insbesondere bei hochdichten Substraten, wie Beton mit niedrigem W/Z-Verhältnis. Das W/Z-Verhältnis gibt das Verhältnis von Wasser und Zement an, d. h. je größer der Wasseranteil - je größer ist der spätere Porenanteil im Beton. Darüber hinaus kann bei Wirkstoffen mit höherem Oligomerisierungsgrad eine Verfärbung der Substratoberfläche auftreten, wobei dies durch das Nichteindringen von höheren Oligomeren in das Substrat verursacht wird oder zumindest ein unerwünschter Glanz bzw. ein öliges Aussehen der Substratoberfläche festzustellen ist.

EP 0 579 453 A2 lehrt ein Verfahren zur Herstellung von Alkylalkoxysiloxanen, insbesondere ein Isobutyltrimethoxysilan-basierendes System, wobei für die gezielte Hydrolyse 0,1 bis 0,6 Mol Wasser pro Mol Alkoxysilan eingesetzt werden. Hierbei entstehen alkoholhaltige Gemische, die einen hohen Anteil an Silanmonomer, d. h. Edukt enthalten, wodurch das Produkt bei Applikation einen hohen Anteil an flüchtigem Monomer aufweist und darüber hinaus einen niedrigen Flammpunkt besitzt. Für Produkte mit einem niedrigen Flammpunkt gelten in einer Reihe von Ländern, u. a. EU, Japan, USA, strenge Transport- und Arbeitssicherheitsvorschriften.

J. Organometallic Chem. Bd. 489 (1995) lehrt die Hydrolyse von i-Propyl- bzw. i- und n-Butyltrimethoxysilan, wobei ein Katalysator, wie Dibutylzinnlaurat, sowie ein Lösemittel, wie Tetrahydrofuran, verwendet werden.

WO 92/06101 offenbart lösemittelfreie Organoalkoxysiloxane mit 2 bis 9 Si-Einheiten zur Wasser abweisenden Ausstattung von mineralischen Baustoffen, wobei dem Siloxan zur Verbesserung der abweisenden Eigenschaften fluororganische Verbindungen zugesetzt werden können. Als Organogruppen des Organoalkoxysiloxans sind u. a. C₁- bis C₃₀-Alkyl/Cycloalkyl/Arylalkyl/Alkaryl oder deren Mischungen, ferner olefinische bzw. mit Heteroatomen bzw. Fluoratomen substituierte Organogruppen aufgezählt. Insbesondere werden Organoalkoxysiloxane mit Alkylgruppen, die 4 bis 8 C-Atome tragen und einen Oligomerisierungsgrad von 2 bis 4 besitzen, hervorgehoben, wobei das 1,3-di-n-Octyl-1,1,3,3-tetraethoxy- und -methoxydisiloxan besonders herausgestellt wird. Es ist aufwendig und teuer, gezielt ein solches Disiloxan herzustellen.

Aus US 5 543 173 gehen neben Aminoalkyl- und Diaminoalkyl-funktionellen Polysiloxanolen auch Methyl-, Ethyl-, i-Propyl- und n-Butyl-, insbesondere Octylfunktionelle Polysiloxanole hervor. Deren Herstellung erfolgt durch gezielte Hydrolyse entsprechender Alkoxysilane, wobei das Produkt einen erheblichen Anteil an Hydrolysealkohol bzw. deutliche Mengen an Lösemittel, wie Toluol oder Methylisobutylketon aufweist.

EP 0 101 816 B1 lehrt, für die Hydrophobierung von Beton lösemittelfreie C₃- bis C₈₋Alkylalkoxysilane, d. h. monomere Alkylalkoxysilane, zu verwenden.

Monomere Alkylalkoxysilane, wie z. B. n-Propyltriethoxysilan (PTEO), Isobutyltriethoxysilan (IBTEO) oder Octyltriethoxysilan (OCTEO), besitzen zwar ein vergleichsweise gutes Eindringverhalten, sind jedoch mit dem Nachteil behaftet, dass sie aufgrund des ihnen eigenen Dampfdrucks verdunsten können, was zu Materialverlusten und Umweltbelastung führt (VOC - "Volatile Organic Compounds").

Es ist auch bekannt, C₃- bis C₈-Alkylalkoxysilane, gelöst in einem Alkohol oder in anderen verdampfbaren bzw. flüchtigen Lösemitteln, zu applizieren. Auch hier sind merkliche Verdunstungsverluste festzustellen. Darüber hinaus besitzen PTEO, IBTEO sowie besagte Lösungen in leicht flüchtigen Lösemitteln einen niedrigen Flammpunkt.

Ferner liefert monomeres PTEO Emulsionen mit einem Flammpunkt unter 55 °C, ist somit als brennbare Flüssigkeit einzustufen, entsprechend aufwendig zu lagern, zu transportieren und zu handhaben.

Um besagte Nachteile zu mindern, wurden in der zurückliegenden Zeit insbesondere Alkoxysilane mit hohem Molekulargewicht verwendet, d. h. Alkylalkoxysilane mit einer Alkylkette, die eine große Zahl an Kohlenstoffatomen aufweist, beispielsweise Octyltriethoxysilan. OCTEO wird in der Regel durch Hydrosilylierung von Octen an Trichlorsilan und anschließende Veresterung in sehr aufwendiger Weise hergestellt. Hierbei handelt es sich um ein hochpreisiges Produkt.

Nun fällt n-Propyltrichlorsilan (PTS) in industriellen Prozessen als Nebenprodukt an. Jedoch übersteigt die im Markt verfügbare Menge die Nachfrage für PTS und PTEO.

Der vorliegenden Erfindung lag somit die Aufgabe zugrunde, ein unter Normalbedingungen verdunstungssicheres Produkt für die Hydrophobierung von Beton sowie anderen mineralischen Baustoffen bereitzustellen, das insbesondere einen höheren Flammpunkt als PTEO oder IBTEO und ein gutes Applikations- bzw. Wirkverhalten besitzt. Ein besonderes Anliegen der vorliegenden Erfindung war es, eine Verbindung auf der Basis PTS oder PTEO bereitzustellen, die darüber hinaus hinreichend hydrolysestabil ist.

Die Aufgabe wird erfindungsgemäß entsprechend den Angaben der Patentansprüche gelöst.

Überraschenderweise wurde nun gefunden, dass man ein spezielles Oligomerengemisch von n-Propylethoxysiloxanen erhält, worin 90 bis 100 Gew.-% an n-Propylethoxysiloxanen mit einem Oligomerisierungsgrad von 2 bis 6 vorliegen, wenn man n-Propyltrimethoxysilan oder n-Propyltrichlorsilan in ethanolischer Lösung und in Gegenwart eines Hydrolyse- bzw. Kondensationskatalysators, vorzugsweise in Gegenwart von Chlorwasserstoff (HCl), unter Zugabe von 0,65 bis 0,85 Mol Wasser pro Mol Si, unter guter Durchmischung, bei einer Temperatur im Bereich von 40 bis 120 °C, vorzugsweise im Bereich bei 60 bis 100 °C, besonders vorzugsweise bei 70 bis 90 °C, ganz besonders vorzugsweise im Bereich von 80 °C, gezielt hydrolysiert und kondensiert, wobei man vorzugsweise nach einer Reaktionszeit von 30 Minuten bis 24 Stunden, vorzugsweise nach 3 bis 6 Stunden, besonders vorzugsweise nach 4 Stunden den Alkohol anteilig oder vollständig einschließlich flüchtigem Katalysator aus dem System entfernt. In der Regel enthalten so erhaltene, erfindungsgemäße Gemische ≤ 5 Gew.-% Ethanol, vorzugsweise weniger als 2 Gew.-%, besonders vorzugsweise liegt der Ethanolgehalt bei 0,001 bis weniger als 0,5 Gew.-%, d. h. bis hin zur Nachweisgrenze, wobei die übrigen Bestandteile des Konzentrats erfindungsgemäße Oligomere sind.

Das erfindungsgemäße Oligomerengemisch von n-Propylethoxysiloxanen zeichnet sich in hervorragender Weise durch seine beispielhafte Wirtschaftlichkeit, durch seine überraschend einfache Herstellbarkeit und Beständigkeit, eine vorteilhafte und vergleichsweise niedrige Viskosität, durch eine gute Hydrolysebeständigkeit sowie durch einen Flammpunkt von deutlich oberhalb 60 °C, d. h. bezogen auf das erfindungsgemäße Konzentrat, aus. Das erfindungsgemäße Oligomerengemisch eignet sich ferner in hervorragender Weise für die Wasser abweisende Ausstattung anorganischer Substrate, insbesondere von Beton und poröser mineralischer Fassadenwerkstoffe. Ferner besitzt das erfindungsgemäße Gemisch ausgezeichnete Anwendungseigenschaften. Bei Applikation des erfindungsgemäßen Oligomerengemisches oder bei Applikation einer wässrigen Emulsion, in die das Oligomerengemisch eingearbeitet ist, kann man sehr gute Eindringtiefen in Beton und somit in einfacher und wirtschaftlicher Weise eine hervorragende Tiefenimprägnierung erzielen. Auch zeigen erfindungsgemäß behandelte Substrate in der Regel keine farblichen Veränderungen. Darüber hinaus sind erfindungsgemäße Oligomerengemische in der Regel verdunstungssicher und ausgezeichnet lagerstabil, selbst bei Emulsionen in Wasser ist eine 50%ige wässrige Emulsion nach einen Zeitraum von einem Jahr verwendbar. Auch kann man das vorliegende Oligomerengemisch vorteilhaft gemeinsam mit monomeren organofunktionellen Silanen und/oder Siloxanen verwenden.

n-Propylethoxysiloxane können in der Regel durch folgende allgemeine Formel näherungsweise, aber anschaulich beschrieben werden: 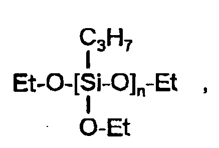 wobei n den Oligomerisierungsgrad wiedergibt. D. h., der Oligomerisierungsgrad gibt die Anzahl der Si-Einheiten pro Molekül an. Zur Bestimmung des Oligomerisierungsgrades wurden für vorliegende Arbeiten die Gelpermeationschromatographie (GPC-Methode) und die 29Si-NMR-Methode eingesetzt. Sofern hier ein Oligomerengemisch mit beispielsweise 100 Gew.-%, bezogen auf wohl definierte Oligomere, angegeben wird, bezieht sich diese Angabe auf die heutige Nachweisgrenze (ca. 1 %) entsprechender Oligomerer mit besagten Methoden.

Um die erfindungsgemäßen Siloxane eingehender beschreiben zu können, wird bei der vorliegenden Anmeldung auf so genannte M-, D- und T-Strukturen zurückgegriffen. Zur Nomenklatur der Benennung solcher Siloxanstrukturen sei auf das "Römpp Chemielexikon" - Stichwort: Silicone - hingewiesen.

Gegenstand der vorliegenden Erfindung ist daher ein Oligomerengemisch von n-Propylethoxysiloxanen, das dadurch gekennzeichnet ist, dass das Oligomerengemisch mindestens 95 Gew.-% an n-Propylethoxysiloxanen enthält, welche einen Oligomerisierungsgrad von 2 bis 6 aufweisen.

Besonders bevorzugt sind erfindungsgemäße Oligomerengemische mit mindestens 95 Gew.-% an n-Propylethoxysiloxanen, welche einen Oligomerisierungsgrad insbesondere von 3 bis 6 aufweisen.

Vorzugsweise enthalten erfindungsgemäße Oligomerengemische folgende Anteile an n-Propylethoxysiloxanen, wobei sich die Angaben jeweils zu 100 Gew.-% durch weitere Komponenten, d. h. im Wesentlichen n-Propylethoxysiloxane, ergänzen:
- 0 bis 30 Gew.-%, besonders vorzugsweise weniger als 5 Gew.-%, ganz besonders vorzugsweise 0,001 bis weniger als 1 Gew.-%, an n-Propylethoxysiloxan mit einem Oligomerisierungsgrad von n gleich 2, welche eine M₂-Struktur besitzen,
- 10 bis 40 Gew.-%, besonders vorzugsweise 15 bis 35 Gew.-%, an n-Propylethoxysiloxanen, welche eine M₂D- und/oder D₃-Struktur besitzen, wobei die besagten Strukturen je einer Molmasse eines n-Propylethoxysiloxans mit dem Oligomerisierungsgrad n gleich 3 entsprechen,
- 30 bis 60 Gew.-%, besonders vorzugsweise 35 bis 50 Gew.-%, ganz besonders vorzugsweise 35 bis 45 Gew.-%, an n-Propylethoxysiloxanen, welche eine M₂D₂₋und/oder M₃T- und/oder D₄-Struktur besitzen, wobei die besagten Strukturen je einer Molmasse eines n-Propylethoxysiloxans mit dem Oligomerisierungsgrad n gleich 4 entsprechen,
- 5 bis 30 Gew.-%, besonders vorzugsweise 10 bis 25 Gew.-%, ganz besonders vorzugsweise 15 bis 24 Gew.-%, an n-Propylethoxysiloxanen, welche eine M₂D₃- und/oder M₃DT- und/oder D₅-Struktur besitzen, wobei welche besagten Strukturen je einer Molmasse eines n-Propylethoxysiloxans mit dem Oligomerisierungsgrad n gleich 5 entsprechen,
- 0,1 bis 25 Gew.-%, besonders vorzugsweise 0,5 bis 20 Gew.-%, ganz besonders vorzugsweise 5 bis 20 Gew.-%, an n-Propylethoxysiloxanen, welche eine M₂D₄- und/oder M₃D₂T- und/oder M₄T₂- und/oder D₆-Struktur besitzen, wobei die besagten Strukturen je einer Molmasse eines n-Propylethoxysiloxans mit einem Oligomerisierungsgrad von n gleich 6 entsprechen.

Gegebenenfalls kann das vorliegende Oligomerengemisch von n-Propylethoxysiloxanen weniger als 10 Gew.-%, bevorzugt 0 bis 8 Gew.-%, besonders bevorzugt von 0,001 bis weniger als 5 Gew.-%, an n-Propylethoxysiloxanen mit einem höheren Oligomerisierungsgrad als 6 enthalten.

Geeigneterweise enthält das vorliegende Oligomerengemisch 0 bis weniger als 5 Gew.-% an n-Propylethoxysiloxanen, welche einen Oligomerisierungsgrad von n gleich 7 bis 20 aufweisen.

Auch ist es geeignet, wenn das vorliegende Oligomerengemisch 0 bis weniger als 1 Gew.-% an n-Propylethoxysiloxanen enthält, welche einen höheren Oligomerisierungsgrad als n gleich 20 aufweisen.

Erfindungsgemäße Oligomerengemische von n-Propylethoxysiloxanen enthalten jedoch bevorzugt, d. h. sofern nachweisbar ausschließlich solche n-Propylethoxysiloxane mit einem Oligomerisierungsgrad von n gleich 2 bis 6, besonders vorzugsweise nur solche mit n gleich 3 bis 6.

Weiterhin kann das erfindungsgemäße Oligomerengemisch freies Ethanol in einer Menge von 0 bis weniger als 5 Gew.-%, bezogen auf das gesamte Gemisch, vorzugsweise 0,001 bis weniger als 2 Gew.-%, ganz besonders vorzugsweise weniger als 1 Gew.-%, freies Ethanol enthalten.

Ferner weisen erfindungsgemäße Oligomerengemische vorzugsweise eine Viskosität von 3 bis 20 mPa s, besonders vorzugsweise von 3 bis 10 mPa s, ganz besonders vorzugsweise von 4 bis 8 mPa s, insbesondere eine Viskosität von 4 bis 7 mPa s auf. Die Viskositätsmessung erfolgt im Allgemeinen nach DIN 53 015.

Ferner ist Gegenstand der vorliegenden Erfindung ein Verfahren zur Herstellung eines Oligomerengemisches von n-Propylethoxysiloxanen, das dadurch gekennzeichnet ist, dass man n-Propyltriethoxysilan oder n-Propyltrichlorsilan in ethanolischer Lösung und in Gegenwart eines Hydrolyse- bzw. Kondensationskatalysators, vorzugsweise Chlorwasserstoff, unter Zusatz von 0,65 bis 0,85 Mol Wasser pro Mol Si bei einer Temperatur im Bereich von 40 bis 120 °C gezielt hydrolysiert, kondensiert und geeigneterweise nach einer Reaktionszeit von 5 Minuten bis 24 Stunden den Alkohol und gegebenenfalls den vorhandenen flüchtigen Katalysator, beispielsweise Chlorwasserstoff, aus dem Reaktionssystem entfernt.

Das Entfernen des Alkohols sowie des Chlorwasserstoffs (HCl) erfolgt bevorzugt, da Produkt schonend, destillativ unter vermindertem Druck.

Das erfindungsgemäße Oligomerengemisch wird nach dem erfindungsgemäßen Verfahren als Produktgemisch erhalten, das geeigneterweise als Konzentrat, in gelöster Form oder als Emulsion, gegebenenfalls in Kombination mit anderen Wirkstoffen verwendet werden kann.

Gegenstand der vorliegenden Erfindung ist ebenfalls ein Oligomerengemisch von n-Propylethoxysiloxanen, das nach dem erfindungsgemäßen Verfahren erhältlich ist.

Darüber hinaus ist Gegenstand der vorliegenden Erfindung die Verwendung eines erfindungsgemäßen Oligomerengemisches von n-Propylethoxysiloxanen zur Wasser (Hydrophobierung), Öl (Oleophobierung), Schmutz abweisenden, Biobefall und/oder Korrosion verhindernden Ausstattung anorganischer Oberflächen. Geeigneterweise kann man erfindungsgemäße Oligomerengemische für Antigraffitianwendungen oder in Mittel für Antigraffitianwendungen verwenden, insbesondere in Verbindung mit fluororganischen Verbindungen bzw. Fluor funktionellen Silanen oder Siloxanen.

Insbesondere sind erfindungsgemäße Oligomerengemische von n-Propylethoxysiloxanen für die Verwendung zur Tiefenimprägnierung von Baustoffen oder Bauwerken geeignet, ganz besonders für mineralische Baustoffe, wie Beton, Kalksandstein, Granit, Kalk, Marmor, Perlit, Klinker, Ziegel, poröse Fliesen und Kacheln, Terrakotta, Naturstein, Porenbeton, Faserzement, Fertigbauteile aus Beton, mineralischer Putz, Estrich, Tonartikel aber auch Kunststein, Mauerwerke, Fassaden, Dächer sowie Bauwerke, wie Brücken, Hafenanlagen, Wohngebäude, Industriegebäude und öffentlich genutzte Gebäude, wie Parkhäuser, Bahnhöfe oder Schulen, aber auch Fertigteile, wie Bahnschwellen oder L-Steine, - um nur einige Beispiele zu nennen.

Zudem können die erfindungsgemäß erhaltenen Siloxangemische für die Hydrophobierung und Oberflächenmodifizierung von Textilien, Leder, Zellulose- und Stärkeprodukten, für die Beschichtung von Glas- und Mineralfasern, als Bindemittel oder als Zusatz zu Bindemitteln, für die Oberflächenmodifizierung von Füllstoffen, für die Verbesserung der rheologischen Eigenschaften von Dispersionen und Emulsionen, als Haftvermittler, beispielsweise für die Verbesserung der Haftung organische Polymere auf anorganischen Substraten, als Trennmittel, als Vernetzer oder als Zusatzstoffe für Farben und Lacke verwendet werden.

Ferner ist Gegenstand der vorliegenden Erfindung die Verwendung eines erfindungsgemäßen Oligomerengemisches von n-Propylethoxysiloxanen zur Behandlung glatter, poröser und/oder partikelförmiger Substrate, beispielsweise Pulver, Stäube, Sande, Faser, Blättchen anorganischer oder organischer Substrate, wie Quarz, Kieselsäure, Flammkieselsäure, siliciumoxidhaltige Minerale, Titanoxide und andere sauerstoffhaltige Titanminerale, Aluminiumoxid und andere aluminiumoxidhaltige Minerale, Aluminiumhydroxide, wie Aluminiumtrihydroxid, Magnesiumoxid und magnesiumoxidhaltige Minerale, Magnesiumhydroxide, wie Magnesiumdihydroxid, Calciumcarbonat und calciumcarbonathaltige Minerale, Glasfasern, Mineralwollefasern, aber auch besondere keramische Pulver, wie Siliciumcarbid, Siliciumnitrid, Borcarbid, Bornitrid, Aluminiumnitrid, Wolframcarbid, Metall oder Metallpulver, insbesondere Aluminium, Magnesium, Silicium, Kupfer, Eisen sowie Metalllegierungen, Ruße.

Geeigneterweise verwendet man ein erfindungsgemäßes Oligomerengemisch in konzentrierter Form, als verdünnte alkoholische Lösung oder gelöst in Kohlenwasserstoffen. Insbesondere setzt man dabei ein erfindungsgemäßes Oligomerengemisch in einer Konzentration von 0,1 bis 100 Gew.-%, vorzugsweise von 1 bis 40 Gew.-%, besonders bevorzugt von 20 bis 40 Gew.-%, ein. Als Alkohole kann man beispielsweise Methanol, Ethanol, Isopropanol, n-Propanol, n-, i- und t-Butanol, vorzugsweise Ethanol, als Kohlenwasserstoffe lineare oder verzweigte aliphatische oder aromatische Systeme mit 5 bis 20 C-Atomen, wie Pentan, Hexan, Cyclohexan, Heptan, Oktan, Dekan, Toluol, Xylol, Paraffine oder Weißöle, vorzugsweise Benzine, verwenden.

Auch ist Gegenstand der vorliegenden Erfindung die Verwendung eines erfindungsgemäßen Oligomerengemisches gemeinsam mit mindestens einem Organoalkoxysilan aus der Reihe Alkylsilane, wie Methyltrimethoxysilan, Methyltriethoxysilan, Ethyltrimethoxysilan, Ethyltriethoxysilan, Propyltrimethoxysilan, Propyltriethoxysilan, n- und i-Butyltrimethoxysilan, n- und i-Butyltriethoxysilan, n-und i-Pentyltrimethoxysilan, n- und i-Pentyltriethoxysilan, n- und i-Hexyltrimethoxysilan, n- und i-Octyltrimethoxysilan, n- und i-Octyltriethoxysilan, Hexadecyltrimethoxysilan, Hexadecyltriethoxysilan, Octadecyltrimethoxysilan, Octadecyltriethoxysilan, Dimethyldimethoxysilan, Dimethyldiethoxysilan, n- und i-Butylmethyldimethoxysilan, n- und i-Butylmethyldiethoxysilan, Cyclohexylmethyldimethoxysilan, Diisopropyldimethoxysilan, Diisobutyldimethoxysilan und lsobutyl-lsopropyldimethoxysilan, Vinylsilane, wie Vinyltrimethoxysilan, Vinyltriethoxysilan und Vinyltris-(2-Methoxyethoxysilan), Aminoalkoxysilan, wie 3-Aminopropyltrimethoxysilan, 3-Aminopropyltriethoxysilan, N-(n-Butyl)-3-aminopropyltrimethoxysilan, 3-Aminopropylmethyldiethoxysilan, 3-Ureidopropyltrimethoxysilan, 3-Ureidopropyltriethoxysilan, N-Aminoethyl-3-aminopropyltrimethoxysilan, N-Aminoethyl-3-aminopropyltriethoxysilan, Triaminofunktionelles Propyltrimethoxysilan und 3-(4,5-Dihydroimidazolyl)propyltriethoxysilan, Glycidether- bzw. Glycidylalkyl-funktionelle Alkoxysilane, wie 3-Glycidyloxypropyltrimethoxysilan und 3-Glycidyloxypropyltriethoxysilan, Fluoralkyl-funktionelle Alkoxysilane, wie Tridecafluorooctyltriethoxysilan und Tridecafluorooctyltrimethoxysilan, Acryl- oder Methacryl-funktionelle Alkoxysilane, wie Acryloxypropyltrimethoxysilan, Acryloxypropyltriethoxysilan, 3-Methacryloxypropyltrimethoxysilan, 3-Methacryloxypropyltriethoxysilan, 3-Methacryloxy-2-methylpropyltrimethoxysilan und 3-Methacryloxy-2-methyl-propyltriethoxysilan, Mercaptofunktionelle Alkoxysilane, wie Mercaptopropyltrimethoxysilan und Mercaptopropyltriethoxysilan, Sulfan- oder Polysulfan-funktionelle Alkoxysilane, wie Bis-(triethoxysilylpropyl)-tetrasulfan, Bis-(trimethoxysilylpropyl)-tetrasulfan, Bis-(triethoxysilylpropyl)-disulfan, Bis-(trimethoxysilylpropyl)-disulfan, Bis-(triethoxysilylpropyl)-sulfan, Bis-(trimethoxysilylpropyl)-sulfan, Bis-(triethoxysilylpropyl)-pentasulfan und Bis-(trimethoxysilylpropyl)-pentasulfan, wobei die Organosiloxane in einer Konzentration von 0,5 bis 99,5 %, bezogen auf die Zusammensetzung, vorliegen können, und/oder mindestens ein Organosiloxan aus der Reihe Vinyl-funktionelle Siloxane, Vinyl-Alkyl-funktionelle Siloxane (Cokondensate), Methacryl-funktionelle Siloxane, Amino-funktionelle Siloxane, Aminoalkyl-Alkyl-funktionelle Siloxane, Aminoalkyl-Fluoralkyl-funktionelle Siloxane oder entsprechende Cokondensate sowie Kondensate, wie sie beispielsweise aus EP 0 590 270 A, EP 0 748 357 A, EP 0 814 110 A, EP 0 879 842 A, EP 0 846 715 A, EP 0 930 342 A, DE 198 18 923 A, DE 198 34 990 A, DE 198 49 308 A, DE 199 04 132 A sowie DE 199 08 636 A zu entnehmen sind, und/oder mindestens einen Kieselsäureester, beispielsweise Tetramethoxysilan, Tetraethoxysilan, Tetran-propylsilicate, Tetrabutylglycolsilicate sowie Ethylpolysilicate und/oder mindestens einen oligomeren Kieselsäureester, beispielsweise DYNASYLAN® 40 oder vergleiche auch DE 27 44 726 C sowie DE 28 09 871 C, in einer Zubereitung verwendet.

Geeigneterweise verwendet man ein erfindungsgemäßes Oligomerengemisch in Gegenwart eines Hydrolyse- und/oder Kondensationskatalysators. Hierdurch kann der Abperleffekt weiter verbessert werden. Beispiele für solche Hydrolyse- bzw. Kondensationskatalysatoren sind Mineralsäuren, wie Chlorwasserstoff, Schwefelsäure, Salpetersäure, organische Säuren, wie Ameisensäure, Essigsäure, Titanate, wie Tetrabutyl-, Tetrapropyl-, Tetraethyl-Titanat, Zirkonate, wie Tetrabutyl-, Tetrapropyl-, Tetraethyl-Zirkonate, organische Zinnverbindungen, wie DBTL = Dibutylzinnlaurat. Man kann die Säure beispielsweise in wässriger bzw. verdünnter, aber auch in konzentrierter Form einsetzen.

Erfindungsgemäße Oligomerengemische von n-Propylethoxysiloxanen zeichnen sich insbesondere durch eine gute Hydrolysestabilität aus, sodass man hieraus in vorteilhafter Weise stabile, wässrige Emulsionen mit einem hohen Flammpunkt formulieren kann.

Vorzugsweise ist ein erfindungsgemäßes Oligomerengemisch zur Verwendung als Ölphase in einer wässrigen, niedrigviskosen bis hochviskosen, pastösen Emulsion geeignet, beispielsweise wie in EP 0 538 555 A1 beschrieben. So kann man das erfindungsgemäße Oligomerengemisch gemeinsam, beispielsweise mit Emulgatoren, Puffer, wie Natriumcarbonat, Verdickungsmitteln, Bioziden, insbesondere Fungiziden, Algiziden, in einer wässrigen Emulsion verwenden.

Insbesondere kann man das erfindungsgemäße Oligomerengemisch auch gemeinsam mit mindestens einem wassergelösten Silancokondensat, wie sie beispielsweise aus DE 15 18 551 A, EP 0 587 667 A, EP 0 716 127 A, EP 0 716 128 A, EP 0 832 911 A, EP 0 846 717 A, EP 0 846 716 A, EP 0 885 895 A, DE 198 23 390 A sowie DE 199 55 047 A hervorgehen, und/oder mindestens einer gegebenenfalls wasserlöslichen fluororganischen Verbindung, wie sie aus US 5 112 393, US 3 354 022 oder WO 92/06101 zu entnehmen sind, und/oder einem wasseremulgierten Siliconwachs verwenden.

Ferner sind Gegenstand der vorliegenden Erfindung Zubereitungen oder Mittel, die in vorteilhafter Weise ein erfindungsgemäßes Oligomerengemisch enthalten, d. h. dass ein erfindungsgemäßes Oligomerengemisch als solches oder als Eduktkomponente bei der Herstellung einer Zubereitung oder eines Mittels verwendet wird.

Weiterhin ist Gegenstand ein Verfahren zur Behandlung von Substraten, indem man ein erfindungsgemäßes Mittel oder eine erfindungsgemäße Zubereitung auf die Substratoberfläche aufbringt und gegebenenfalls thermisch und/oder photochemisch, beispielsweise durch IR- oder UV-Bestrahlung, nachbehandelt.

Gegenstand ist ferner eine erfindungsgemäß erhältliche Schicht, d. h. eine Beschichtung auf einem Substrat, oder die Imprägnierung eines Substrats, welche unter Verwendung erfindungsgemäßer Zubereitungen oder Mittel erhältlich ist.

Ebenfalls Gegenstand sind in vorteilhafter, erfindungsgemäßer Weise erhältliche oberflächenbehandelte Substrate, beispielsweise erfindungsgemäß behandelter Beton, Kalksandstein, Klinker, Ziegel, Terrakotta, Kunststein, Naturstein, Porenbeton, Faserzement und Tonartikel.

Daher zählen auch Artikel, die auf einem erfindungsgemäß oberflächenbehandelten Substrat basieren, zum Gegenstand der Erfindung. Beispiele sind Artikel aus erfindungsgemäß imprägnierten Betonfertigteilen, wie Fertighäuser, Tunnel, Brücken und Behälter.

Im Allgemeinen kann das erfindungsgemäße Oligomerengemisch wie folgt hergestellt werden.

Zunächst kann man aus n-Propyltrichlorsilan mit Ethanol durch vollständige Veresterung unter Abspaltung und Entfernung von HCl, wie an sich bekannt, n-Propyltriethoxysilan herstellen. Anschließend führt man die Partialhydrolyse des Esters durch. In der Regel erfolgt die Umsetzung unter Zusatz geeigneter Katalysatoren, z. B. HCl. Geeigneterweise arbeitet man in verdünnter Lösung. Dazu kann man Ethanol im Überschuss einsetzen. Zur Hydrolyse werden vorzugsweise 0,65 bis 0,85 Mol Wasser pro Mol n-Propyltriethoxysilan gezielt eingesetzt. Die Hydrolyse erfolgt vorzugsweise bei erhöhter Temperatur, üblicherweise im Bereich von 40 bis 120 °C, und wird im Allgemeinen so gefahren, dass sich sämtliches Wasser umsetzt. Der entstehende Hydrolysealkohol kann geeigneterweise zusammen mit dem flüchtigen Katalysator aus dem Reaktionsgemisch destillativ entfernt werden. In der Regel wird dazu bei erhöhter Temperatur, üblicherweise 40 bis 180 °C und unter Vakuum gearbeitet, üblicherweise < 10 mbar abs. Zur Vervollständigung der destillativen Aufarbeitung kann ein Inertgasstrom als Schleppmittel verwendet werden, vorzugsweise wird hierzu trockener Stickstoff verwendet. Das farblose, neutrale Sumpfprodukt kann ohne weitere Aufarbeitung direkt als Bautenschutzmittel oder als Ölphase für wässrige Emulsionssysteme verwendet werden oder für die übrigen genannten Applikationen genutzt werden.

Andererseits kann die Synthese des n-Propylalkoxysiloxans auch direkt aus n-Propyltrichlorsilan, Wasser und Ethanol erfolgen. Zur Hydrolyse werden wiederum 0,65 bis 0,85 Mol Wasser pro Mol eingesetzten n-Propyltrichlorsilans verwendet. Vorteilhafterweise wird das Wasser zusammen mit Ethanol gemischt, dem n-Propyltrichlorsilan zugegeben und umgesetzt, wobei man Ethanol, bezogen auf die Stöchiometrie der Reaktion, vorzugsweise im Überschuss einsetzt. Geeigneterweise wird dabei HCl aus dem Reaktionsraum entfernt. Die Reaktion findet vorzugsweise bei erhöhter Temperatur statt, siehe oben. Rest-HCl kann durch Zudosieren von weiterem Ethanol und Abdestillieren bei erhöhter Temperatur unter Vakuum entfernt werden. Alternativ kann zur Neutralisation, d. h. Umsetzung und Entfernung von HCl aus dem Reaktionsgemisch, eine Base, wie z. B. Natriumethylat oder Ammoniak, eingesetzt werden. Üblicherweise fällt das korrespondierende Salz - Natriumchlorid bzw. - Ammoniumchlorid aus, welches durch Filtration aus dem Reaktionsgemisch entfernt werden kann.

Die oben beschriebenen Verfahrensweisen liefern ein erfindungsgemäßes Produkt, das beispielsweise folgende physikalisch-chemischen Eigenschaften und folgende Oligomerenverteilung aufweist:

| | |
|---|---|
| Flammpunkt: | 118 °C |
| Siedepunkt: | 268 °C |
| Viskosität: | 4,5 mPa s |
| Wassergehalt: | ≤ 0,05 % |
| Freies Ethanol: | ≤ 0,1 % |

| Oligomerisierungsgrad (Strukturtypen) | Anteil in Gew.-% |
|---|---|
| 3 (M₂D, D₃) | 32 |
| 4 (M₂D₂, M₃T, D₄) | 43 |
| 5 (M₂D₃, M₃DT, D₅) | 15 |
| 6 (M₂D₄, M₃D₂T, M₄T₂, D₆) | 5 |

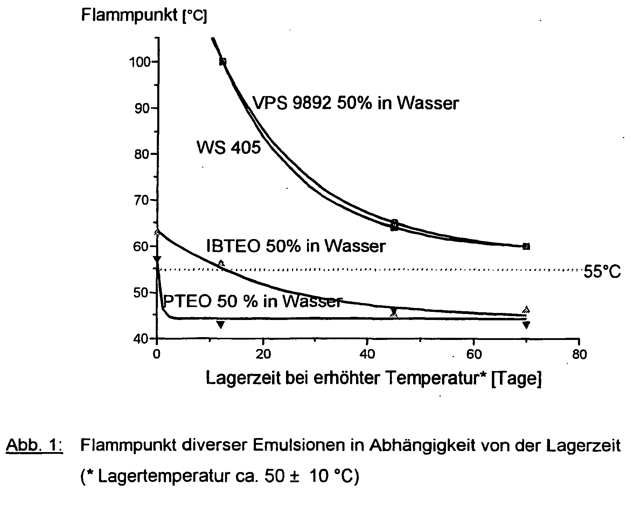

Abbildung 1 spiegelt das Flammpunktverhalten diverser Emulsionen in Abhängigkeit von der Lagerzeit wider.

So sind der Abbildung 1 die Flammpunkte von jeweils monomerem n-Propyltriethoxysilan (50 Gew.-% PTEO in Wasser), monomerem i-Butyltriethoxysilan (50 Gew.-% IBTEO in Wasser), monomerem n-Octyltriethoxysilan (WS 405, 50 Gew.-% OCTEO in Wasser) und Versuchsprodukt 9892 (50 Gew.-% n-Propylethoxysiloxan in Wasser), vgl. Beispiel 1, zu entnehmen. Produkte, deren Flammpunkte niedriger als 55 °C liegen, sind nach Deutschem Chemikaliengesetz kennzeichnungspflichtig. Die Grafik zeigt, dass mit zunehmender Lagerzeit bei erhöhter Temperatur (40 °C) der Flammpunkt durch freien Hydrolysealkohol sinkt. Das erfindungsgemäße Produkt VPS 9892 und das OCTEO-basierende WS 405 weisen praktisch identisches Flammpunktverhalten auf, jedoch ist das erfindungsgemäße Produkt auf PTEO-Kondensatbasis deutlich preisgünstiger. Zudem ist festzustellen, dass die Emulsionen aus PTEO und IBTEO nicht stabil sind, schon nach einem Tag erfolgt starkes Aufrahmen. Solche Emulsionen sind für Bautenschutzanwendungen nicht verwendbar. Die Flammpunktbestimmungen werden in diesem Fall jeweils nach intensiver Homogenisierung durchgeführt.

Darüber hinaus wird die vorliegende Erfindung durch nachfolgende Beispiele näher erläutert.

### Beispiele

### Beispiel 1

### Herstellung eines Gemisches oligomerer n-Propylsiloxane aus n-Propyltriethoxysilan und Wasser (0,8 mol Wasser pro mol Si) Produktbezeichnung VPS 9892

In einer 2-I-Doppelmantelrührapparatur wird n-Propyltriethoxysilan (PTEO) vorgelegt und auf ca. 80 °C aufgeheizt. Bei dieser Temperatur wird mit Hilfe eines Tropftrichters ein Gemisch aus Ethanol, Wasser und Salzsäure zugetropft. Anschließend wird das gesamte Reaktionsgemisch vier Stunden am Rückfluss gekocht. Danach wird das eingesetzte und bei der Hydrolyse freigesetzte Ethanol zunächst bei Umgebungsdruck und anschließend im Vakuum abdestilliert. Die im Sumpf verbleibende Flüssigkeit ist VPS 9892.

| Eingesetzte Mengen: | |
|---|---|
| PTEO | 1.120,5 g |
| Wasser | 76,5 g |
| Ethanol | 321 g |
| HCl (32 Gew.-% in Wasser) | 1,5 g |

| Isoliertes Produkt: | |
|---|---|
| VPS 9892 (Ausbeute: 97 % d. Th.) | 780,81 g |

### Beispiel 2

### Herstellung eines Gemisches oligomerer n-Propylsiloxane (hydrolysiert mit 0,6 mol Wasser pro mol Si)

In einer 4-I-Doppelmantelrührapparatur wird n-Propyltriethoxysilan (PTEO) vorgelegt und auf ca. 80 °C aufgeheizt. Bei dieser Temperatur wird mit Hilfe eines Tropftrichters ein Gemisch aus Ethanol, Wasser und Salzsäure zugetropft. Anschließend wird das gesamte Reaktionsgemisch vier Stunden am Rückfluss gekocht. Danach wird das eingesetzte und bei der Hydrolyse freigesetzte Ethanol zunächst bei Umgebungsdruck und anschließend im Vakuum abdestilliert. Die im Sumpf verbleibende Flüssigkeit ist das gewünschte Propylsiloxan.

| Eingesetzte Mengen: | |
|---|---|
| PTEO | 1.442,7 g |
| Wasser | 75,6 g |
| Ethanol | 1.518 g |
| HCl (32 Gew.-% in Wasser) | 1,58 g |

| Isoliertes Produkt: | |
|---|---|
| Propylsiloxan (Ausbeute: 91 % d. Th.) | 1.030,9 g |

Zusammensetzung nach GPC (= Gelpermeationschromatographie. Mittels GPC können Gemische unterschiedlicher Molekülgröße getrennt werden. Durch Vergleich mit einem Standard ist die Bestimmung der einzelnen Molekulargewichte möglich.):

| | |
|---|---|
| Monomer | 5 % |
| M2 | 63 % |
| M2D, D3 | 27 % |
| M2D2, M3T, D4 | 3 % |
| M2D3, M3DT, D5 und höhere Oligomere | 2 % |
| Viskosität | 2,8 mPa s (DIN 53 015) |
| Flammpunkt | 97 °C (EN 22719) |

### Vergleichsbeispiel A

### Herstellung eines Gemisches oligomerer Propylsiloxane (hydrolysiert mit 1,6 mol Wasser pro mol Si)

In einer 4-I-Doppelmantelrührapparatur wird n-Propyltriethoxysilan (PTEO) vorgelegt und auf ca. 80 °C aufgeheizt. Bei dieser Temperatur wird mit Hilfe eines Tropftrichters ein Gemisch aus Ethanol, Wasser und Salzsäure zugetropft. Anschließend wird das gesamte Reaktionsgemisch vier Stunden am Rückfluss gekocht. Danach wird das eingesetzte und bei der Hydrolyse freigesetzte Ethanol zunächst bei Umgebungsdruck und anschließend im Vakuum abdestilliert. Die im Sumpf verbleibende Flüssigkeit ist das gewünschte Propylsiloxan.

Die Analyse des abdestillierten Alkohols lieferte einen signifikanten Wassergehalt, was die effektiv eingesetzte Menge Wasser auf einen Wert von ca. 1,33 mol Wasser pro mol eingesetzten Si sinken lässt.

| Eingesetzte Mengen: | |
|---|---|
| PTEO | 2.473,2 g |
| Wasser | 345,9 g |
| Ethanol | 593,6 g |
| HCl (32 Gew.-% in Wasser) | 2,34 g |

| Isoliertes Produkt: | |
|---|---|
| Propylsiloxan (Ausbeute: 95 % d. Th.) | 1.222 g |

| Zusammensetzung nach GPC: | |
|---|---|
| M2 | 0% |
| M2D, D3: | 0 % |
| M2D2, M3T, D4: | 8 % |
| M2D3, M3DT, D5: | 8 % |
| M2D4, M2D2T, M4T2, D6: | 14 % |
| Höhere Oligomere | 70 % |
| Viskosität: | 165 mPa s (DIN 53 015) |
| Flammpunkt: | 136 °C (EN 22719) |

### Beispiel 4

### Eindringverhalten von VPS 9892 auf Kalksandstein

Ein Kalksandstein Probekörper (zugesägter, handelsüblicher Kalksandstein in den Massen 5 x 5 x 5 cm, im Umlufttrockenschrank bei 60 °C bis zur Gewichtskonstanz getrocknet anschließend ca. 3 Stunden im Labor abgekühlt auf Raumtemperatur) wird 2 x 5 Sek. in VPS 9892 getaucht. Zwischen den Imprägnierschritten lässt man den Probekörper 30 Sek. abtropfen. Nach der zweiten Imprägnierung wird überschüssiges Imprägniermittel mit einem saugfähigen Tuch abgetupft. Anschließend lässt man den Prüfkörper ca. 1 Woche bei Raumtemperatur im Labor ausreagieren. Danach spaltet man den Prüfkörper mittels Hammer und Meißel in 2 Hälften. Die frischen Bruchflächen werden mit einer wässrigen Farbstofflösung (Azorubin S) behandelt. Hydrophile Bereiche werden rot angefärbt, hydrophobe Bereiche bleiben farblos, weil sie von der wässrigen Tinte nicht benetzt werden. Die nicht eingefärbten Bereiche weisen die Eindringtiefe aus. Diese wird mittels eines geeigneten Maßstabes an unterschiedlichen Bereichen gemessen und der Mittelwert gebildet. Im Falle der mit VPS 9892 behandelten Prüfkörper beträgt die gemittelte Eindringtiefe 5 mm und ist damit ausreichend für eine dauerhafte Hydrophobierung. Eindringtiefen kleiner 1 mm weisen auf eine nicht ausreichende Hydrophobierwirkung hin. Die mit VPS 9892 imprägnierten Probekörper weisen keine visuell wahrnehmbare Oberflächenveränderung auf. Nach Ausreagieren (1 Woche Labor) ist die Oberfläche klebfrei. VPS 9892 ist damit in hervorragender Weise zur hydrophobierenden Imprägnierung von porösen, mineralischen Baustoffen geeignet.

### Vergleichsbeispiel B

### Eindringverhalten eines Octylsiloxangemisches gemäß Beispiel EP 0 814 110 A1 auf Kalksandstein

Ein Kalksandstein Probekörper (zugesägter, handelsüblicher Kalksandstein in den Massen 5 x 5 x cm, im Umlufttrockenschrank bei 60 °C bis zur Gewichtskonstanz getrocknet anschließend ca. 3 Stunden im Labor abgekühlt auf Raumtemperatur) wird 2 x 5 Sek. in einem Octylsiloxan gemäß Beispiel EP 0 814 110 A getaucht. Zwischen den Imprägnierschritten lässt man den Probekörper 30 Sek. abtropfen. Nach der zweiten Imprägnierung wird überschüssiges Imprägniermittel mit einem saugfähigen Tuch abgetupft. Anschließend lässt man den Prüfkörper ca. 1 Woche bei Raumtemperatur im Labor ausreagieren. Danach spaltet man den Prüfkörper mittels Hammer und Meißel in 2 Hälften. Die frischen Bruchflächen werden mit einer wässrigen Farbstofflösung (Azorubin S) behandelt. Hydrophile Bereiche werden rot angefärbt, hydrophobe Bereiche bleiben farblos, weil sie von der wässrigen Tinte nicht benetzt werden. Die nicht eingefärbten Bereiche weisen die Eindringtiefe aus. Diese wird mittels eines geeigneten Maßstabes an unterschiedlichen Bereichen gemessen und der Mittelwert gebildet. Im Falle der mit Octylsiloxan gemäß Beispiel EP 0 814 110 A behandelten Prüfkörper beträgt die gemittelte Eindringtiefe < 1 mm und ist damit nicht ausreichend für eine dauerhafte Hydrophobierung. Eindringtiefen kleiner 1 mm weisen auf eine nicht ausreichende Hydrophobierwirkung hin. Die mit Octylsiloxan gemäß Beispiel EP 0 814 110 A imprägnierten Probekörper zeigen eine leichte aber deutlich wahrnehmbare Oberflächeneindunkelung. Dies ist bei hydrophobierenden Imprägnierungen unerwünscht. Nach Ausreagieren (1 Woche Labor) ist die Oberfläche klebfrei. Ein derartiges Produkt eignet sich nur sehr eingeschränkt zur hydrophobierenden Imprägnierung von porösen, mineralischen Baustoffen.

### Vergleichsbeispiel C

### Eindringverhalten eines oligomeren n-Propylsiloxangemisches (hydrolysiert mit 1,6 mol Wasser pro mol Si) auf Kalksandstein

Ein Kalksandstein Probekörper (zugesägter, handelsüblicher Kalksandstein in den Massen 5 x 5 x 5 cm, im Umlufttrockenschrank bei 60 °C bis zur Gewichtskonstanz getrocknet anschließend ca. 3 Stunden im Labor abgekühlt auf Raumtemperatur) wird 2 x 5 Sek. in ein oligomeres Propylsiloxan, hydrolysiert mit 1,6 mol Wasser pro mol Si, getaucht. Zwischen den Imprägnierschritten lässt man den Probekörper 30 Sek. abtropfen. Nach der zweiten Imprägnierung wird überschüssiges Imprägniermittel mit einem saugfähigen Tuch abgetupft. Danach spaltet man den Prüfkörper mittels Hammer und Meißel in 2 Hälften. Die frischen Bruchflächen werden mit einer wässrigen Farbstofflösung (Azorubin S) behandelt. Hydrophile Bereiche werden rot angefärbt, hydrophobe Bereiche bleiben farblos, weil sie von der wässrigen Tinte nicht benetzt werden. Die nicht eingefärbten Bereiche weisen die Eindringtiefe aus. Diese wird mittels eines geeigneten Maßstabes an unterschiedlichen Bereichen gemessen und der Mittelwert gebildet. Im Falle der mit oligomerem Propylsiloxan, hydrolysiert mit 1,6 mol Wasser pro mol Si, behandelten Prüfkörpers beträgt die gemittelte Eindringtiefe < 1 mm und ist damit nicht ausreichend für eine dauerhafte Hydrophobierung. Eindringtiefen kleiner 1 mm weisen auf eine nicht ausreichende Hydrophobierwirkung hin.

Die mit oligomerem Propylsiloxan, hydrolysiert mit 1,6 mol Wasser pro mol Si, imprägnierten Probekörper zeigen eine deutlich wahrnehmbare Oberflächeneindunkelung. Dies ist bei hydrophobierenden Imprägnierungen unerwünscht. Nach Ausreagieren (1 Woche Labor) ist die Oberfläche nicht klebfrei. Ein derartiges Produkt eignet sich nicht zur hydrophobierenden Imprägnierung von porösen mineralischen Baustoffen.

## Patentansprüche

1. Oligomerengemisch von n-Propylethoxysiloxanen,
**dadurch gekennzeichnet,**
**dass** das Oligomerengemisch mindestens 95 Gew.-% an n-Propylethoxysiloxanen enthält, welche einen Oligomerisierungsgrad von 2 bis 6 aufweisen.

2. Oligomerengemisch nach Anspruch 1,
**dadurch gekennzeichnet,**
**dass** das Oligomerengemisch mindestens 95 Gew.-% an n-Propylethoxysiloxanen enthält, welche einen Oligomerisierungsgrad von 3 bis 6 aufweisen.

3. Oligomerengemisch nach Anspruch 1 oder 2,
**dadurch gekennzeichnet,**
**dass** das Oligomerengemisch 0 bis 30 Gew.-% an n-Propylethoxysiloxan mit einem Oligomerisierungsgrad von n gleich 2 enthält.

4. Oligomerengemisch nach einem der Ansprüche 1 bis 3,
**dadurch gekennzeichnet,**
**dass** das Oligomerengemisch 10 bis 40 Gew.-% an n-Propylethoxysiloxanen enthält, welche eine M₂D- und/oder D₃-Struktur besitzen.

5. Oligomerengemisch nach einem der Ansprüche 1 bis 4,
**dadurch gekennzeichnet,**
**dass** das Oligomerengemisch 30 bis 60 Gew.-% an n-Propylethoxysiloxanen enthält, welche eine M₂D₂- und/oder M₃T- und/oder D₄-Struktur besitzen.

6. Oligomerengemisch nach einem der Ansprüche 1 bis 5,
**dadurch gekennzeichnet,**
**dass** das Oligomerengemisch 5 bis 30 Gew.-% an n-Propylethoxysiloxanen enthält, welche eine M₂D₃- und/oder M₃DT- und/oder D₅-Struktur besitzen.

7. Oligomerengemisch nach einem der Ansprüche 1 bis 8,
**dadurch gekennzeichnet,**
**dass** das Oligomerengemisch 0,1 bis 25 Gew.-% an n-Propylethoxysiloxanen enthält, welche eine M₂D₄- und/oder M₃D₂T- und/oder M₄T₂- und/oder D₆₋Struktur besitzen.

8. Oligomerengemisch nach einem der Ansprüche 1 bis 7,
**dadurch gekennzeichnet,**
**dass** das Oligomerengemisch weniger als 5 Gew.-% an n-Propylethoxysiloxanen enthält, welche einen Oligomerisierungsgrad von n gleich 7 bis 20 aufweisen.

9. Oligomerengemisch nach einem der Ansprüche 1 bis 8,
**dadurch gekennzeichnet,**
**dass** das Oligomerengemisch weniger als 1 Gew.-% an n-Propylethoxysiloxanen enthält, welche einen höheren Oligomerisierungsgrad als n gleich 20 aufweisen.

10. Oligomerengemisch nach einem der Ansprüche 1 bis 9,
**dadurch gekennzeichnet,**
**dass** das Oligomerengemisch ≤ 5 Gew.-% freies Ethanol enthält.

11. Verfahren zur Herstellung eines Oligomerengemisches von n-Propylethoxysiloxanen nach einem der Ansprüche 1 bis 10,
**dadurch gekennzeichnet,**
**dass** man n-Propyltriethoxysilan oder n-Propyltrichlorsilan in ethanolischer Lösung und in Gegenwart eines Hydrolyse- bzw. Kondensationskatalysators unter Zusatz von 0,65 bis 0,85 Mol Wasser pro Mol Si bei einer Temperatur im Bereich von 40 bis 120 °C hydrolysiert, kondensiert und den Alkohol sowie den Chlorwasserstoff aus dem Reaktionssystem entfernt.

12. Oligomerengemisch von n-Propylethoxysiloxanen nach einem der Ansprüche 1 bis 10, erhältlich nach Anspruch 11.

13. Verwendung eines Oligomerengemisches nach mindestens einem der Ansprüche 1 bis 12 zur Wasser, Öl, Schmutz abweisenden, Biobefall und/oder Korrosion verhindernden Ausstattung anorganischer Oberflächen.

14. Verwendung nach Anspruch 13 für die Imprägnierung von Baustoffen oder Bauwerken.

15. Verwendung eines Oligomerengemisches nach mindestens einem der Ansprüche 1 bis 14 zur Behandlung glatter, poröser und/oder partikelförmiger Substrate.

16. Verwendung eines Oligomerengemisches nach einem der Ansprüche 1 bis 15 für die Behandlung von anorganischen Oberflächen, zur Wasser, Öl, Schmutz bzw. Farbe abweisenden oder Korrosion verhindernden oder Haft vermittelnden Ausstattung von Metall, Keramik, Baustoffen und Bauwerken, wie Eisen, Stahl, Ziegel, Mauersteinen, Naturstein, Beton, Kalksandstein, Marmor, Fliesen, Kunststein, Flachglas, Hohlglas, Verbundglas, Brücken, Dächern, Fassaden, für die Hydrophobierung und Oberflächenmodifizierung von Textilien, Leder, Zellulose- und Stärkeprodukten, für die Beschichtung von Glas- und Mineralfasern, als Bindemittel oder als Zusatz zu Bindemitteln, für die Oberflächenmodifizierung von Füllstoffen, für die Verbesserung der rheologischen Eigenschaften von Dispersionen und Emulsionen, als Haftvermittler, für die Verbesserung der Haftung organischer Polymere auf anorganischen Substraten, als Trennmittel, als Vernetzer oder als Zusatzstoffe für Farben und Lacke.

17. Verwendung eines Oligomerengemisches nach mindestens einem der Ansprüche 1 bis 16, wobei man das Oligomerengemisch in konzentrierter Form als verdünnte alkoholische Lösung oder als Lösung in Kohlenwasserstoffen einsetzt.

18. Verwendung eines Oligomerengemisches nach einem der Ansprüche 1 bis 17, wobei man das Oligomerengemisch gemeinsam mit (i) mindestens einem Organoalkoxysilan aus der Reihe der Alkyl-, Vinyl-, Aminoorganoalkoxysilane, Glycidether- bzw. Glycidyloxyalkyl-funktionellen Alkoxysilane, Fluororgano-funktionellen Alkoxysilane, Acryl- oder Methacryl-funktionellen Alkoxysilane, Mercapto-funktionellen Alkoxysilane, Sulfan- oder Polysulfan-funktionellen Alkoxysilane und/oder (ii) mindestens einem Organosiloxan aus der Reihe der Vinyl-funktionellen Siloxane, Glycidyloxyalkyl-funktionellen Siloxane, Alkylfunktionellen Siloxane, Methacryl-funktionellen Siloxane, Fluoralkyl- bzw. Fluororgano-funktionellen Siloxane sowie entsprechender Cokondensate und/oder (iii) mindestens einem Kieselsäureester und/oder (iv) mindestens einem oligomeren Kieselsäureester in einer Zubereitung verwendet.

19. Verwendung eines Oligomerengemisches nach mindestens einem der Ansprüche 1 bis 18 in Gegenwart eines Hydrolyse- und/oder Kondensationskatalysators.

20. Verwendung eines Oligomerengemisches nach mindestens einem der Ansprüche 1 bis 19, wobei man das Oligomerengemisch als Ölphase in einer wässrigen Emulsion verwendet.

21. Verwendung eines Oligomerengemisches nach mindestens einem der Ansprüche 1 bis 20, wobei man das Oligomerengemisch gemeinsam mit mindestens einem wassergelösten Silancokondensat und/oder mindestens einer wasserlöslichen fluororganischen Verbindung und/oder mindestens einem wasseremulgierten Siliconwachs verwendet.

22. Zubereitung oder Mittel, welches ein Oligomerengemisch nach mindestens 12 einem der Ansprüche 1 bis 10 oder 12 enthält und nach mindestens einem der Ansprüche 13 bis 21 verwendet wird.

23. Verfahren zur Behandlung von Substraten, indem man ein Mittel oder eine Zubereitung nach Anspruch 22 auf eine Substratoberfläche aufbringt und gegebenenfalls thermisch und/oder photochemisch nachbehandelt.

24. Schicht auf einem Substrat oder Imprägnierung eines Substrats, erhältlich nach Anspruch 23.

25. Oberflächenbehandelte Substrate, erhältlich nach Anspruch 23.

26. Artikel, die auf einem oberflächenbehandelten Substrat nach einem der Ansprüche 24 oder 25 basieren.

## Claims

1. An oligomer mixture of n-propylethoxysiloxanes, **characterized in that** the oligomer mixture contains at least 95% by weight of n-propylethoxysiloxanes having a degree of oligomerization of from 2 to 6.

2. An oligomer mixture according to claim 1, **characterized in that** the oligomer mixture contains at least 95% by weight of n-propylethoxysiloxanes having a degree of oligomerization of from 3 to 6.

3. An oligomer mixture according to either of claims 1 and 2, **characterized in that** the oligomer mixture contains from 0 to 30% by weight of n-propylethoxysiloxane having a degree of oligomerization n of 2.

4. An oligomer mixture according to any one of claims 1 to 3, **characterized in that** the oligomer mixture contains from 10 to 40% by weight of n-propylethoxysiloxanes possessing an M₂D and/or D₃ structure.

5. An oligomer mixture according to any one of claims 1 to 4, **characterized in that** the oligomer mixture contains from 30 · to 60% by weight of n-propylethoxysiloxanes possessing an M₂D₂ and/or M₃T and/or D₄ structure.

6. An oligomer mixture according to any one of claims 1 to 5, **characterized in that** the oligomer mixture contains from 5 to 30% by weight of n-propylethoxysiloxanes possessing an M₂D₃ and/or M₃DT and/or D₅ structure.

7. An oligomer mixture according to any one of claims 1 to 6, **characterized in that** the oligomer mixture contains from 0.1 to 25% by weight of n-propylethoxysiloxanes possessing an M₂D₄ and/or M₃D₂T and/or M₄T₂ and/or D₆ structure.

8. An oligomer mixture according to any one of claims 1 to 7, **characterized in that** the oligomer mixture contains less than 5% by weight of n-propylethoxysiloxanes having a degree of oligomerization n of from 7 to 20.

9. An oligomer mixture according to any one of claims 1 to 8, **characterized in that** the oligomer mixture contains less than 1% by weight of n-propylethoxysiloxanes having a degree of oligomerization n of more than 20.

10. An oligomer mixture according to any one of claims 1 to 9, **characterized in that** the oligomer mixture contains ≤ 5% by weight of free ethanol.

11. A process for preparing an oligomer mixture of n-propylethoxysiloxanes according to any one of claims 1 to 10, **characterized in that** n-propyltriethoxysilane or n-propyltrichlorosilane is subjected to hydrolysis and condensation in ethanolic solution and in the presence of a hydrolysis and condensation catalyst, with the addition of from 0.65 to 0.85 mol of water per mole of Si at a temperature in the range from 40 to 120°C, and the alcohol and hydrogen chloride are removed from the reaction system.

12. An oligomer mixture of n-propylethoxysiloxanes according to any one of claims 1 to 10, obtainable according to claim 11.

13. The use of an oligomer mixture according to at least one of claims 1 to 12 for the water-repelling, oil-repelling, dirt-repelling, bioinfestation-preventing and/or corrosion-preventing treatment of an inorganic surface.

14. The use according to claim 13 to impregnate a building material or built structure.

15. The use of an oligomer mixture according to at least one of claims 1 to 14 to treat smooth, porous and/or particulate substrates.

16. The use of an oligomer mixture according to any one of claims 1 to 15 to treat an inorganic surface, for the water-, oil-, dirt- and/or paint-repelling or corrosion-preventing or adhesion-promoting treatment of metal, ceramic, building materials and built structures, such as iron, steel, brick, masonry, natural stone, concrete, lime sandstone, marble, tiles, artificial stone, sheet glass, hollow glass, laminated glass, bridges, roofs, façades, to hydrophobicize and surface-modify textiles, leather, cellulose products and starch products, to coat glass fibres and mineral fibres, as a binder or additive to binders, to surface-modify fillers, to improve the rheological properties of dispersions and emulsions, as an adhesion promoter, to improve the adhesion of organic polymers on inorganic substrates, as a release agent, as a crosslinker, or an additive to paints and varnishes.

17. The use of an oligomer mixture according to at least one of claims 1 to 16, wherein the oligomer mixture is used in concentrated form, as a dilute alcoholic solution or as a solution in hydrocarbons.

18. The use of an oligomer mixture according to any one of claims 1 to 17 together with (i) at least one organoalkoxysilane from the group consisting of alkyl-, vinyl-, aminoorganoalkoxysilanes, glycidyl ether-functional and glycidyloxyalkyl-functional alkoxysilanes, fluoroorgano-functional alkoxysilanes, acryloyl- or methacryloyl-functional alkoxysilanes, mercapto-functional alkoxysilanes, sulphane- or polysulphane-functional alkoxysilanes and/or (ii) at least one organosiloxane from the group consisting of vinyl-functional siloxanes, glycidyloxyalkyl-functional siloxanes, alkyl-functional siloxanes, methacryloyl-functional siloxanes, fluoroalkyl- and fluoroorgano-functional siloxanes, and also corresponding cocondensates and/or (iii) at least one silicic ester and/or (iv) at least one oligomeric silicic ester, in one formulation.

19. The use of an oligomer mixture according to at least one of claims 1 to 18 in the presence of a hydrolysis and/or condensation catalyst.

20. The use of an oligomer mixture according to at least one of claims 1 to 19 as an oil phase in an aqueous emulsion.

21. The use of an oligomer mixture according to at least one of claims 1 to 20 together with at least one water-dissolved silane cocondensate and/or at least one water-soluble organic fluorine compound and/or at least one water-emulsified silicone wax.

22. A formulation or composition which contains an oligomer mixture according to at least one of claims 1 to 10 or 12 and is used according to at least one of claims 13 to 21.

23. A method of treating a substrate, which comprises applying a composition or formulation according to claim 22 to a substrate surface and subjecting it, if desired, to thermal and/or photochemical aftertreatment.

24. A layer on a substrate or an impregnation of a substrate, obtainable according to claim 23.

25. A surface-treated substrate obtainable according to claim 23.

26. An article based on a surface-treated substrate according to either one of claims 24 and 25.

## Revendications

1. Mélange d'oligomères de n-propyléthoxysiloxanes,
**caractérisé en ce que**
le mélange d'oligomères comporte au moins 95 % en poids de n-propyléthoxysiloxanes présentant un degré d'oligomérisation de 2 à 6.

2. Mélange d'oligomères selon la revendication 1,
**caractérisé en ce que**
le mélange d'oligomères comporte au moins 95 % en poids de n-propyléthoxysiloxanes présentant un degré d'oligomérisation de 3 à 6.

3. Mélange d'oligomères selon l'une quelconque des revendications 1 ou 2,
**caractérisé en ce que**
le mélange d'oligomères comporte 0 à 30 % en poids de n-propyléthoxysiloxanes présentant un degré d'oligomérisation de n = 2.

4. Mélange d'oligomères selon l'une quelconque des revendications 1 à 3,
**caractérisé en ce que**
le mélange d'oligomères comporte entre 10 et 40 % en poids de n-propyléthoxysiloxanes qui possèdent une structure M₂D et/ou D₃.

5. Mélange d'oligomères selon l'une quelconque des revendications 1 à 4,
**caractérisé en ce que**
le mélange d'oligomères comporte entre 30 et 60 % en poids de n-propyléthoxysiloxanes qui possèdent une structure M₂D₂ et/ou M₃T et/ou D₄.

6. Mélange d'oligomères selon l'une quelconque des revendications 1 à 5,
**caractérisé en ce que**
le mélange d'oligomères comporte entre 5 et 30 % en poids de n-propyléthoxysiloxanes qui possèdent une structure M₂D₃ et/ou M₃DT et/ou D₅.

7. Mélange d'oligomères selon l'une quelconque des revendications 1 à 6,
**caractérisé en ce que**
le mélange d'oligomères comporte entre 0,1 et 25 % en poids de n-propyléthoxysiloxanes qui possèdent une structure M₂D₄ et/ou M₃D₂T et/ou M₄T₂ et/ou D₆.

8. Mélange d'oligomères selon l'une quelconque des revendications 1 à 7,
**caractérisé en ce que**
le mélange d'oligomères comporte moins de 5 % en poids de n-propyléthoxysiloxanes présentant un degré d'oligomérisation de n = 7 à 20.

9. Mélange d'oligomères selon l'une quelconque des revendications 1 à 8,
**caractérisé en ce que**
le mélange d'oligomères comporte moins d'1 % en poids de n-propyléthoxysiloxanes présentant un degré d'oligomérisation plus élevé que n = 20.

10. Mélange d'oligomères selon l'une quelconque des revendications 1 à 9,
**caractérisé en ce que**
le mélange d'oligomères comporte ≤ 5 % en poids d'éthanol libre.

11. Procédé de préparation d'un mélange d'oligomères de n-propyléthoxysiloxanes selon l'une quelconque des revendications 1 à 10,
**caractérisé en ce qu'**
on hydrolyse du n-propyltriéthoxysilane ou du n-propyltrichlorosilane dans une solution éthanolique et en présence d'un catalyseur d'hydrolyse ou de condensation, en ajoutant 0,65 à 0,85 mole d'eau par mole de Si à une température dans une plage de 40 à 120 °C, on le condense et on enlève l'alcool ainsi que le gaz chlorhydrique du système réactif.

12. Mélange d'oligomères de n-propyléthoxysiloxanes selon l'une quelconque des revendications 1 à 10, obtenu selon la revendication 11.

13. Utilisation d'un mélange d'oligomères selon au moins l'une quelconque des revendications 1 à 12, pour l'équipement de surfaces anorganiques avec une protection contre l'eau, l'huile, les salissures, biocides et/ou anti-corrosion.

14. Utilisation selon la revendication 13, pour l'imprégnation de matériaux de construction ou d'ouvrages.

15. Utilisation d'un mélange d'oligomères selon au moins l'une quelconque des revendications 1 à 14, pour le traitement de substrats lisses, poreux et/ou particulaires.

16. Utilisation d'un mélange d'oligomères selon l'une quelconque des revendications 1 à 15, pour le traitement de surfaces anorganiques, pour l'équipement protégeant contre l'eau, l'huile, les salissures ou la peinture, voire empêchant la corrosion ou conférant une adhérence au métal, à la céramique, aux matériaux de construction et aux ouvrages, comme le fer, l'acier, les tuiles, les briques, la pierre de taille, le béton, le grès argilo-calcaire, le marbre, les carrelages, la pierre synthétique, le verre plat, le verre creux, le verre composite, les ponts, les toits, les façades, pour l'hydrophobisation et la modification de surfaces de textiles, de cuirs, de produits de cellulose et d'amidon, pour le revêtement de fibres de verre et de minéraux, en tant qu'agent liant ou en tant qu'additif pour les agents liants, pour la modification de surfaces de charges, pour l'amélioration des propriétés rhéologiques de dispersions et d'émulsifiants, en tant qu'adhérent, pour l'amélioration de l'adhérence de polymères organiques sur des substrats anorganiques, en tant qu'agent de séparation, réticulant ou additifs pour les peintures et les vernis.

17. Utilisation d'un mélange d'oligomères selon au moins l'une des revendications 1 à 16, le mélange d'oligomères étant alors utilisé sous sa forme concentrée en tant que solution alcoolique diluée ou solution dans des hydrocarbures.

18. Utilisation d'un mélange d'oligomères selon l'une quelconque des revendications 1 à 17, le mélange d'oligomères étant utilisé conjointement dans une préparation, avec :
(i) au moins l'un des organoalcoxysilanes de la gamme des alkyl-, vinyl-, aminoorganoalcoxysilanes, alcoxysilanes glycidéther- ou glycidyloxyalkyl-fonctionnels, des alcoxysilanes fluororgano-fonctionnels, des alcoxysilanes acryl- ou méthacryl-fonctionnels, des alcoxysilanes mercapto-fonctionnels, des alcoxysilanes sulfan- ou polysulfan-fonctionnels, et/ou
(ii) au moins l'un des organosiloxanes de la gamme des siloxanes vinyl-fonctionnels, siloxanes glycidyloxyalkyl-fonctionnels, des siloxanes alkyl-fonctionnels, des siloxanes méthacryl-fonctionnels, des siloxanes fluoralkyl- ou fluororgano-fonctionnels ainsi que des co-condensats correspondants, et/ou
(iii) au moins un ester d'acide silicique, et/ou
(iv) au moins un ester d'acide silicique.

19. Utilisation d'un mélange d'oligomères selon au moins l'une des revendications 1 à 18, en présence d'un catalyseur d'hydrolyse et/ou de condensation.

20. Utilisation d'un mélange d'oligomères selon au moins l'une des revendications 1 à 19, le mélange d'oligomères étant utilisé comme phase huileuse dans une émulsion aqueuse.

21. Utilisation d'un mélange d'oligomères selon au moins l'une des revendications 1 à 20, le mélange d'oligomères étant utilisé conjointement avec au moins un cocondensat de silane dilué dans de l'eau et/ou au moins d'un composé fluororganique soluble dans l'eau et/ou au moins une cire de silicone émulsifiée dans l'eau.

22. Préparation ou produit comportant un mélange d'oligomères selon au moins l'une des revendications 1 à 10 ou 12, et utilisé(e) selon au moins l'une quelconque des revendications 13 à 21.

23. Procédé de traitement de substrats par application d'un produit ou d'une préparation selon la revendication 22, sur une surface de substrat et avec le cas échéant, traitement ultérieur thermique et/ou photochimique.

24. Couche sur un substrat ou imprégnation d'un substrat obtenue selon la revendication 23.

25. Substrats aux surfaces traitées, obtenus selon la revendication 23.

26. Articles à base de substrat traité en surface selon l'une quelconque des revendications 24 ou 25.
